# EUROPÄISCHE PATENTSCHRIFT

(11) **EP 3 625 087 B1**
(45) Veröffentlichungstag und Bekanntmachung des Hinweises auf die Patenterteilung: **06.03.2024**
(21) Anmeldenummer: 19729153.7
(22) Anmeldetag: 18.06.2019
(51) Int. Cl.: B60N 2/02, B60R 16/037, B60R 25/25, G01L 1/14, G01N 27/22, B60N 2/58, B60N 2/00

(54) **KONTROLLSYSTEM ZUR ABGLEICHUNG VON GEMESSENEN DRUCK- UND/ODER FEUCHTIGKEITSWERTEN**
CONTROL SYSTEM FOR EVALUATING MEASURED PRESSURE AND/OR HUMIDITY VALUES
SYSTÈME DE CONTRÔLE PERMETTANT D'AJUSTER DES VALEURS DE PRESSION ET/OU D'HUMIDITÉ MESURÉES

(30) Priorität: 09.08.2018 DE 102018119385
(43) Veröffentlichungstag der Anmeldung: 25.03.2020
(60) Teilanmeldung: 20168739.9
(73) Patentinhaber: B-Horizon GmbH, 93053 Regensburg (DE)
(72) Erfinder: KABANY, Mohammed, 93053 Regensburg (DE)
(74) Vertreter: Hannke Bittner & Partner mbB Regensburg
(86) Internationale Anmeldenummer: PCT/EP2019/066026
(87) Internationale Veröffentlichungsnummer: WO 2020/030339

(56) Entgegenhaltungen:
- WO-A1-2017/122178
- WO-A1-2017/122178
- US-A1- 2017 082 567
- US-A1- 2017 082 567
- US-B2- 7 243 945
- US-B2- 7 243 945

## Beschreibung

Die vorliegende Erfindung betrifft ein Kontrollsystem zur Abgleichung von gemessenen Feuchtigkeitswerten, sowie ein Verfahren zur Abgleichung von gemessenen Feuchtigkeitswerten umfassend die jeweiligen Oberbegriffe der Patentansprüche 1 und 10. Insbesondere kann es sich beim hier vorgeschlagenen Kontrollsystem um ein System zur Erhöhung der Sicherheit und Komfort insbesondere im Automotive Bereich mit Hilfe der gemessenen Feuchtigkeitswerten handeln.

Die US 7 243 945 B2 bezieht sich auch auf eine Vorrichtung und ein Verfahren zur Insassenerfassung eines Fahrzeugs zum Zwecke der Steuerung eines Fahrzeugsystems wobei Feuchtesensoren zum Einsatz kommen. Die US 2017/082567 A1 offenbart ein MEMS-Feuchtesensor und in der WO 2017/122178 A1 wird ein 3D stacked paper skin aus Feuchte-, Druckund Temperatursensor zur Messung an der Haut offenbart.

Das erfindungsgemäße Kontrollsystem zur Abgleichung von gemessenen Feuchtigkeitswerten umfasst zumindest einen Sensor zur Messung von Feuchtigkeit, wobei der Sensor zumindest einen Kondensator mit zumindest zwei Elektroden umfasst, welche, insbesondere in einer horizontalen Richtung, entlang eines und auf einem, insbesondere flexiblen, Trägermaterial zueinander angeordnet sind, wobei zwischen den Elektroden zumindest eine dielektrische Schicht angeordnet ist.

Die horizontale Richtung ist vorzugsweise eine Haupterstreckungsrichtung des flexiblen Trägermaterials.

"Flexibel" heißt in diesem Zusammenhang, dass das Trägermaterial zumindest stellenweise biegsam und damit elastisch ist.

Insbesondere kann es sich bei dem Trägermaterial um einen Webstoff oder um einen sonstigen Bekleidungsstoff wie zum Beispiel ein Polyester handeln.

Die dielektrische Schicht beabstandet damit die beiden Elektroden in einer horizontalen und/oder in einer dazu senkrechten Querrichtung.

Erfindungsgemäß ist auf einer dem Trägermaterial abgewandten Seite zumindest eine Elektrode und/oder der dielektrischen Schicht zumindest stellenweise, zumindest eine, zumindest teilweise flüssigkeitsdurchlässige und/oder flüssigkeitsabsorbierende Feuchteschicht angeordnet, wobei somit die zumindest eine Elektrode und/oder dielektrische Schicht in einer Querrichtung zwischen dem Trägermaterial und der Feuchteschicht angeordnet sind, sodass eine Kapazität durch die auf die dielektrische Schicht zumindest teilweise treffende Flüssigkeit, zumindest teilweise verändert, wobei eine Verarbeitungseinheit dazu eingerichtet und dafür vorgesehen ist, die Messwerte des Sensors zu messen und/oder zu speichern, sodass ein kapazitiver Feuchtesensor entsteht.

Ein kapazitiver Feuchtesensor ist im Prinzip ein Kondensator, dessen Dielektrikum vorzugsweise aus einem hygroskopischen Polymerschicht besteht, die entsprechend der Feuchtigkeit der Umgebungsluft Feuchtigkeit aufnimmt (absorbiert) oder abgibt (desorbiert) bis ein Gleichgewichtszustand (Diffusionsgefälle ist = 0) erreicht ist. Dabei verändert sich die Dielektrizitätskonstante des Polymermaterials als Funktion eines Feuchtegehalts.

Die Aufgabe der Verarbeitungseinheit besteht unter anderem darin, vorzugsweise auch aus einer gemessenen Umgebungstemperatur und dem feuchtigkeitsabhängigen Kapazitätswert des Sensors die relative Feuchte möglichst genau zu ermitteln.

Erfindungsgemäß werden von der Verarbeitungseinheit die von dem Sensor gemessenen Daten an eine zentrale CPU (Central Processing Unit) gesendet, wobei diese Daten von der Verarbeitungseinheit verarbeitet werden. Die CPU und die Verarbeitungseinheit sind vorzugsweise verschieden voneinander. Die CPU und die Verarbeitungseinheit sind zum Beispiel voneinander beabstandet angeordnet. Insbesondere können die Verarbeitungseinheit und die CPU nicht auf einem gemeinsamen Träger und/oder Substrat angeordnet sein, sofern der Träger nicht das Trägermaterial, also zum Beispiel einem Textil, ist.

Auch ist denkbar, dass die hier beanspruchte Vorrichtung, und insbesondere die Sensoren, auf einer Innenfläche eines Reifen verbaut sind. Auch ist denkbar, dass die Sensoren sogar mit in das Material des Reifen eingefügt sind. Dabei ist vorstellbar, dass die Sensoren alle in das Material eingefügt und damit von dem Material des Reifens ummantelt sind und die Verarbeitungseinheiten auf der Innenfläche des Reifens angeordnet sind. Alternativ können jedoch auch die Verarbeitungseinheiten in das Material des Reifens eingefügt sein. Die Sensoren können dann den Reifeninnendruck, die Reifeninnentemperatur und/oder die Einzeloder Gesamtlaufzeit des Reifens erfassen.

Gemäß zumindest einer Ausführungsform umfasst das Messsystem zumindest eines Vorrichtung zur Messung von Feuchtigkeit, wobei die Vorrichtung zumindest einen Sensor zur Messung von Feuchtigkeit aufweist, wobei der Sensor zumindest einen Kondensator mit zumindest zwei Elektroden umfasst, welche insbesondere in einer horizontalen Richtung entlang eines und auf einem insbesondere flexiblen Trägermaterial zueinander angeordnet sind, wobei zwischen den Elektroden zumindest eine dielektrische Schicht angeordnet ist.

Erfindungsgemäß ist auf eine dem Trägermaterial abgewandten Seite zumindest eine Elektrode und/oder dielektrische Schicht zumindest stellenweise, zumindest eine, zumindest teilweise flüssigkeitsdurchlässige und/oder flüssigkeitsabsorbierende Schicht (= Feuchteschicht) angeordnet, wobei somit die zumindest eine Elektrode und/oder dielektrische Schicht in Querrichtung zwischen dem Trägermaterial und der Feuchteschicht angeordnet sind, sodass eine Kapazität durch die auf die dielektrische Schicht zumindest teilweise treffende Flüssigkeit, zumindest teilweise verändert wird, wobei eine Verarbeitungseinheit dazu eingerichtet und dafür vorgesehen ist diese Messwerte des Sensors zu messen und/oder zu speichern, sodass ein kapazitiver Feuchtesensor entsteht.

Erfindungsgemäß werden von der Verarbeitungseinheit die von dem Sensor gemessenen Daten an eine zentrale CPU (Central Processing Unit) gesendet, wobei diese Daten von der Verarbeitungseinheit verarbeitet werden.

Weiter erfindungsgemäß vergleicht die zentrale CPU und/oder die Verarbeitungseinheit diese Daten, also die Feuchtigkeitswerte, mit in einer Datenbank hinterlegten Werten oder an die Datenbank gesendete entsprechenden Werten, und, vorzugsweise nur, bei Übereinstimmung mit diesen hinterlegten Werten oder entsprechenden Wertebereichen, schaltet die zentrale CPU ein Freigabesignal an eine Abgleicheinrichtung sendet, welche daraufhin ein Nutzungsobjekt zur Nutzung freigibt.

Mit anderen Worten geht es in vorliegender Erfindung unter anderem darum, dass nur berechtige und/oder geeignete Benutzer das Nutzungsobjekt benutzen können. Bei dem Nutzungsobjekt kann es sich um einen Fahrzeugsitz oder einen sonstigen freizuschaltenden Gegenstand handeln. Auch kann es sich bei dem Nutzungsobjekt um ein Fahrzeug handeln.

Insbesondere kann in der Datenbank ein, beispielsweise genau ein, Feuchtigkeitsgrenzwert und/oder Druckgrenzwert hinterlegt sein, bis zu dem eine Freischaltung des Nutzungsobjekts erfolgt.

Die Datenbank kann auf der Abgleichvorrichtung gespeichert sein.

Die Datenkommunikation zwischen der zentralen CPU und/oder der Verarbeitungseinheit und der Abgleicheinrichtung kann drahtfrei, also zum Beispiel über WLAN, Bluetooth oder ähnliches durchgeführt werden.

Gemäß zumindest einer Ausführungsform umfasst das Kontrollsystem zumindest eine Sendeeinrichtung, welche an die Abgleicheinrichtung vorgegebene Werte oder Wertebereiche der Feuchtigkeitswerte sendet, und die Abgleicheinrichtung diese empfangenen Werte mit den von der zentralen CPU an die Abgleicheinrichtung gesendeten Werte oder Wertebereiche vergleicht.

Gemäß zumindest einer Ausführungsform handelt es sich der Sendeeinrichtung um ein Fahrzeugzugangssystem, zum Beispiel um einen Fahrzeugschlüssel, oder diese ist zumindest ein Teil davon, wobei die Sendeeinrichtung dazu eingerichtet und dafür vorgesehen ist mittels einer drahtlosen Verbindung mit der Abgleicheinrichtung und/oder der zentralen CPU zu kommunizieren.

Zum Beispiel kann so eine Schlüsselerkennung realisiert sein. Insbesondere kann ein Schlüssel nämlich einem oder mehreren, vorzugsweise genau einem, Benutzer zugeordnet sein. Jede Sendeeinrichtung, insbesondere damit auch jeder Schlüssel, kann ein ganz bestimmter Feuchtewert, welcher in der Datenbank hinterlegt ist, entsprechen. Fällt der durch die Vorrichtung gemessene Feuchtewert (wenn ein Benutzer zum Beispiel auf einem Fahrzeugsitz Platz nimmt) nicht in einen Normnutzungsbereich (Bereich von Feuchtewert innerhalb dessen eine Benutzung erlaubt wird) so kann eine Nutzung des Fahrzeugsitzes insbesondere jedoch des gesamten Fahrzeugs versagt werden. Zum Beispiel bleib die Zündung des Fahrzeugs aus oder das Lenkrad versperrt.

Auch ist denkbar, dass von einem Benutzer erzeugte Feuchtewerte von der Vorrichtung gemessen werden und dann in den Schlüssel eingespeist werden. Hierzu kann der Schlüssel einen Speicherchip aufweisen.

Wird der Schlüssel nun wiederbenutzt kann sich vor Belegung des Fahrzeugsitzes der Sitz automatisch in seiner Form und Sitzposition an den Benutzer anpassen.

Denkbar ist auch, dass nach einer Sitzbelegung des Fahrzeugsitzes abhängig von der identifizierten Person eine vorgespeicherte Sitzposition, ein vorgespeichertes Licht- und /oder Schallambiente, ein vorgespeicherter Musik- und/oder Radiosender oder andere personalisierte Dienste ausgewählt und/oder angewendet werden.

Gemäß zumindest einer Ausführungsform ist die Abgleicheinrichtung in den Fahrzeugschlüssel integriert verbaut. Alternativ oder zusätzlich kann die Abgleicheinrichtung auch in die zentrale CPU und/oder die Verarbeitungseinheit verbaut sein. Zudem ist es möglich, dass die zentrale CPU und/oder die Verarbeitungseinheit die Rolle der Abgleicheinrichtung übernehmen. In diesem Fall kann auf eine separate Abgleicheinrichtung verzichtet sein.

Gemäß zumindest einer Ausführungsform gibt die Abgleicheinrichtung ein Fahrzeugschloss, eine Wegfahrsperre, ein Lenkradschloss, ein Gas- und/oder Bremspedal zur Nutzung bei einer Datenübereinstimmung frei. Bei diesen Elementen kann es sich jeweils um ein Nutzungselement handeln.

Gemäß zumindest einer Ausführungsform ermittelt auf Basis der einzelnen Feuchte- und Druckwerte die zentrale CPU zumindest einen jeweiligen Kennwert, aus welchem ableitbar ist, welches Individuum nach Gewicht und/oder Größe gerade die Vorrichtung zur Messung von Feuchtigkeit besetzt.

Gemäß zumindest einer Ausführungsform gilt, dass sofern die gemessenen Daten mit den hinterlegten Daten nicht übereinstimmen und/oder um mehr als 25% von den hinterlegten Datenwerten abweichen eine Gesichtserfassungseinrichtung ein Gesicht des Benutzers auf Basis von Bilddaten erfasst, und trotz der Datenabweichung dann das Nutzungselement freischaltet, sofern die Gesichtserfassungseinrichtung ein Benutzergesicht als identisch mit einem in der Gesichtserfassungseinrichtung hinterlegten Gesicht identifiziert.

Gemäß zumindest einer Ausführungsform werden die erfassten Bilddaten mit den Berechtigungsdaten verglichen, die ebenso in der Datenbank hinterlegt sind, wobei dieser Vergleich einen Klassifikationsvergleich von Datenklassen der Bilddaten mit Datenklassen der Berechtigungsdaten umfasst, wobei eine Klassifikation der Bilddaten auf Basis von Bewegungsvektoren des Benutzers derart durchgeführt wird, dass zunächst aus der zeitlichen Bewegung des Benutzers ein Bewegungsprofil von der Gesichtserfassungseinrichtung erstellt wird, wobei das Bewegungsprofil des Benutzers Bewegungsvektoren desselbigen umfasst, und weiter wobei ein Benutzer und/oder Benutzerbewegungen zu sogenannten Datenblops oder Datenclustern zusammengefasst werden, die dann in ihrer Form und/oder Ausdehnung klassifiziert werden.

Der Sensor und/oder die Verarbeitungseinheit und/oder die zentrale CPU können mittels einer Batterie oder einer Festnetzstromversorgung mit elektrischer Energie versorgt werden.

Alternativ oder zusätzlich ist die Erzeugung von elektrischer Energie zur Versorgung des Sensors und/oder Verarbeitungseinheit mittels sogenannten "Energy Harvesting" möglich.

Als Energy Harvesting (wörtlich übersetzt *Energie-Ernten*) bezeichnet man die Gewinnung kleiner Mengen von elektrischer Energie aus Quellen wie Umgebungstemperatur, Vibrationen oder Luftströmungen für mobile Geräte mit geringer Leistung. Die dafür eingesetzten Strukturen werden auch als Nanogenerator bezeichnet. Energy Harvesting vermeidet bei Drahtlostechnologien Einschränkungen durch kabelgebundene Stromversorgung oder Batterien.

Möglichkeiten des Energy Harvesting:
- Piezoelektrische Kristalle erzeugen bei Krafteinwirkung, beispielsweise durch Druck oder Vibration, elektrische Spannungen. Diese Kristalle können an oder auf dem Trägermaterial angeordnet sein.
- Thermoelektrische Generatoren und pyroelektrische Kristalle gewinnen aus Temperaturunterschieden elektrische Energie. Diese Generatoren können an oder auf dem Trägermaterial angeordnet sein.
- Über Antennen kann die Energie von Radiowellen, eine Form von elektromagnetischer Strahlung, aufgefangen und energetisch verwendet werden. Ein Beispiel dafür sind die passiven RFIDs. Diese Antennen können an oder auf dem Trägermaterial angeordnet sein.

- Photovoltaik, elektrische Energie aus der Umgebungsbeleuchtung.
- Osmose.

Ein Energiespeicher der Vorrichtung kann Teil einer Verarbeitungseinheit sein. Hierzu können eine oder mehrere der Verarbeitungseinheiten einen solchen Energiespeicher (lokale Energiespeicher) aufweisen. Zum Beispiel weisen nur eine oder einige der Verarbeitungseinheiten einen solchen Energiespeicher auf, sodass eine dieser Verarbeitungseinheiten eine andere Verarbeitungseinheit (nämlich eine solche, welche keinen Energiespeicher aufweist) mit elektrischer Energie versorgt.

Auch ist denkbar, dass die Energiespeichereinheit(en) der Verarbeitungseinheit(en) die CPU mit elektrischer Energie ganz oder teilweise versorgt. Zum Beispiel kann so die CPU an keine weiteren Energiespeicher und/oder Energieversorgungsleitungen angeschlossen sein.

Über das oben genannte Energy Harvesting kann zumindest einer der Energiespeicher geladen werden.

Die Energieübertragung zwischen den Sensoren und/oder den Verarbeitungseinheiten und/oder der CPU kann ganz oder teilweise drahtlos erfolgen.

Zu der drahtlosen Energieübertragungen im Nahfeld, auch als nicht strahlende Kopplung bezeichnet, zählt beispielsweise die induktive Kopplung, basierend auf dem magnetischen Fluss. Häufig wird die Bezeichnung der drahtlosen Energieübertragung synonym für die induktive Energieübertragung verwendet, da diese in praktischen Anwendungen eine dominante Rolle einnimmt. Bei der nicht strahlenden Kopplung im Nahfeld spielen Wellenphänomene keine Rolle.

Beispielsweise geschieht die drahtlose Energieübertragung zwischen den einzelnen Elementen mittels induktiver Kopplung, resonanter induktiver Kopplung und/oder kapazitiver Kopplung.

Gemäß zumindest einer Ausführungsform weist das Kontrollsystem zumindest zwei Sensoren auf, wobei durch die Verarbeitungseinheit die Sensoren in Gruppen aus zumindest einem Sensor auf Basis zumindest einem der folgenden Kriterien unterteilt werden:
- Anordnungsort des Sensors oder der Sensoren auf dem Trägermaterial , wobei das Trägermaterial in Flächengebiete eingeteilt ist, und innerhalb
- eines Flächengebiets nur Sensoren einer Gruppe angeordnet sind,
- Flächenausdehnung eines Sensors.

Gemäß zumindest einer Ausführungsform umfasst das Kontrollsystem zumindest zwei Vorrichtungen zur Messung von Feuchtigkeit, wobei jede Verarbeitungseinheit ihre von den Sensoren empfangenen Daten an die zentrale CPU weiterleitet. Die Datenverbindung zwischen der Verarbeitungseinheit und der zentralen CPU kann kabelgebunden (mit Datenverbindungen) oder aber Wireless erfolgen. Hierzu kann zumindest eine Verarbeitungseinheit eine Bluetooth Verbindung zu der zentralen CPU aufbauen.

Gemäß zumindest einer Ausführungsform umfasst zumindest eine Vorrichtung zumindest zwei Sensoren. Insofern kann eine Sensorgruppe bereits durch diese zwei Sensoren gebildet sein. Die beiden Sensoren könne dann durch eine gemeinsame Verarbeitungseinheit gesteuert und/oder geregelt werden.

Denkbar ist, dass die Vielzahl von Verarbeitungseinheiten ein Verarbeitungsnetzwerk ausbilden, wobei die Erfassung, Verarbeitung und/oder Weitergabe der Sensordaten und/oder der Verarbeitungsdaten eines jeden Sensors und/oder einer jeden Verarbeitungseinheit durch zumindest eine Steuerungseinrichtung (Master) gesteuert wird. Die Steuerungseinheit kann identisch mit der oben beschriebenen CPU sein.

Es ist jedoch auch möglich, dass eine oder mehrere der Verarbeitungseinheiten den Master darstellen, welcher die übrigen Verarbeitungseinheiten (Slave) und/oder die übrigen Sensoren (Slave) steuern.

Zum Beispiel kann eine der Verarbeitungseinheiten und/oder die CPU nach Inbetriebnahme der Vorrichtung (zum Beispiel nach eine Anschalten der Vorrichtung), solche Sensoren auswählen, welche für eine vorgebbare Nutzungsdauer in Betrieb genommen werden. Alternativ können auch alle oder einige Sensoren in Betrieb genommen werden, dann jedoch ist vorstellbar, dass eine Verarbeitungseinheit und/oder die CPU, insbesondere zum Zwecke der Energieersparnis, nur Daten einer vorgegebenen Anzahl (also weniger als alle Sensoren) von Sensoren an die CPU weiterleitet (Filterung).

Diese Master-Verarbeitungseinheit kann vorzugsweise als einzige Einheit mit der CPU kommunizieren.

Weiter alternativ oder zusätzlich ist vorstellbar, dass eine oder alle Verarbeitungseinheiten und/oder ein Sensor (Slave oder Master) direkt mit der CPU kommunizieren.

Gemäß zumindest einer Ausführungsform ermittelt die zentrale CPU einen Auslastungsgrad (CPU-Last und/oder Speicherverbrauch) von zumindest einer Verarbeitungseinheit, wobei bei Überschreiten einer Grenztemperatur der Verarbeitungseinheit und/oder zumindest der dieser Verarbeitungseinheit zugeordneten Sensor diese(r) in seiner Leistung zumindest teilweise gedrosselt oder ganz abgeschaltet wird

Gemäß zumindest einer Ausführungsform ist der Sensor zusätzlich ein kapazitiver Drucksensor, wobei die Verarbeitungseinheit zusätzlich dazu eingerichtet und dafür vorgesehen ist, eine durch äußeren Druck verursachte Kapazitätsänderung des Kondensators zu messen und/oder zu speichern.

Grundsätzlich handelt es sich bei einem kapazitiven Sensor also um einen Sensor, welcher auf Basis der Veränderung der elektrischen Kapazität eines einzelnen Kondensators oder eines Kondensatorsystems arbeitet. Die Beeinflussung der Kapazität durch die zu erfassende Größe kann dabei auf verschiedene Arten, erfolgen die primär durch den Verwendungszweck bestimmt ist.

Ein kapazitiver Sensor basiert unter anderem darauf, dass zwei Elektroden, einer davon kann die zumessende Oberfläche sein, die "Platten" eines elektrischen Kondensators bilden, dessen Kapazität oder Kapazitätsänderung gemessen wird, die folgendermaßen beeinflusst werden kann:
- Eine Platte wird durch den zumessenden Effekt verschoben und/oder verformt, wodurch sich der Plattenabstand und damit die elektrische messbare Kapazität ändern.
- Die Platten sind starr und die Kapazität an Sich ändert sich dadurch, dass ein elektrisch leitendes Material oder ein Dielektrikum in unmittelbare Nähe gebracht wird.
- Die wirksame Plattenfläche ändert sich, indem die Platten wie bei einem Drehkondensator gegeneinander verschoben werden.

Um auch kleine Veränderungen besser detektieren zu können kann die eigentliche Messelektrode häufig mit einer Schirmelektrode umgeben sein, die den inhomogenen Randbereich des elektrischen Feldes von der Messelektrode abschirmt, dadurch ergibt sich zwischen Messelektroden üblicherweise geerdeter Gegenelektrode eine annähernd paralleles elektrisches Feld mit der bekannten Charakteristik eines idealen Plattenkondensators.

Ein kapazitiver Drucksensor ist insbesondere ein solcher, bei dem die Kapazitätsänderung infolge des Durchbiegens einer Membran und der resultierenden Änderung des Plattenabstands als Sensoreffekt ausgewertet wird. Zum Beispiel handelt es sich bei der Membran um das oben genannte Dielektrikum oder aber um die einzelnen Kondensatorelektroden welche insbesondere in Form einer Platte ausgeführt sein können. Mit anderen Worten ist in einer derartigen Ausführungsform in neuartiger Art und Weise ein kapazitiver Feuchtesensor mit einem kapazitiven Drucksensor kombiniert, jedoch ohne dass diese Bauteile voneinander getrennte Elemente oder zwei separate Sensoren bildeten, sondern es handelt sich bei vorliegender Ausführungsform um ein "Two in One"-Konzept, in welchem der gleiche Sensor sowohl als Feuchtesensor, als auch als Drucksensor fungiert.

Gemäß zumindest einer Ausführungsform handelt es sich bei dem Trägermaterial um einen Webstoff, insbesondere in welchem elektrische Leiterbahnen zur elektrischen Kontaktierung des Sensors und der Verarbeitungseinheit eingewoben sind.

Bei einem Webstoff handelt es sich im Sinne der Erfindung daher um ein Gewebe, welches manuell oder maschinell auf Basis von einzelnen Fäden gewebt wurde.

Die elektrischen Leiterbahnen können in einem Gewebe daher zusätzlich neben den üblichen Fasern und Gewebesträngen integriert sein oder aber einzelne Gewebestränge welche das Gewebenetz ausbilden ersetzen.

Je nach Abstand und Eigenschaften der einzelnen Fäden (hochgedreht, bauschig, usw.) können ganz lockere Gewebe, wie Verbandgewebe oder Dichtegewebe wie Brokatstoff entstehen. Längselastisch werden Gewebe durch, als Kettenfäden eingesetzte Gummifäden (mehr Bändern verwendet) oder Kräusel- und Bauschgarne verwendet. Sie werden gespannt, verarbeitet und ziehen sich im Ruhezustand zusammen. Bauschgarne bestehen aus texturiertem, also gekräuseltem synthetischen Fasern. Die Kräuselung verändert die Eigenschaften der synthetischen Fasern. Die darauf gesponnenen Garne sind sehr elastisch und voluminös und haben eine gute Wärmedämmung.

Zum Beispiel kann das Trägermaterial Teil eines Bezugstoffes eines Sitzes, insbesondere eines Fahrzeugsitzes oder eines Bürostuhls, sein. Insofern kann der Sensor, vorzugsweise jedoch die gesamte Vorrichtung, auf dem Bezugsstoff eines solchen Sitzes aufgebracht oder in einen solchen integriert sein.

Zum Beispiel ist die Verarbeitungseinheit dazu eingerichtet und dafür vorgesehen, die einzelnen Feuchte- sowie Druckwerte zu erfassen und aus einer Kombination der einzelnen Feuchte- und Druckwerte zumindest einen jeweiligen Kennwert zu ermitteln, aus welchem ableitbar ist, welches Individuum (mit Gewicht und/oder Größe) gerade den Fahrzeugsitz besetzt.

Zum Beispiel kann aus der Druckmessung durch die Verarbeitungseinheit ein Gewicht der jeweiligen Person abgeleitet und festgestellt werden. Auch kann die jeweilige Feuchtigkeit, welche die jeweilige Person an den Sensor abgibt gemessen werden, wobei der jeweilige Kennwert zum Beispiel ein Produkt aus dem relativen Feuchtigkeitswert mal der von der Verarbeitungseinheit ermittelten Belastungsgewicht ist.

Überschreitet ein derartiger Kennwert einen entsprechenden Grenzwert kann die Verarbeitungseinheit insbesondere mittels einer Anbindung an die Elektronik des Fahrzeugs, eine Warnung aussprechen. Diese Warnung kann dahingehend lauten, dass der Sitz überbelegt ist oder der Fahrer zu stark schwitzt. Diese Warnung kann jedoch auch ersetzt werden durch eine entsprechende Anzeige dahingehend welcher Belegungstyp den Sitz nutzt. Bei einem Belegungstyp kann es sich um eine Gewichtsklassifikation eines jeweiligen Benutzers handeln, oder aber auch darum Handeln ob es sich bei dem Benutzer um ein Tier, einen Menschen oder auch um eine Sache handelt. Vorzugsweise ist daher die Verarbeitungseinheit in eine Anzeigenelektronik des Fahrzeugs integrierbar, zumindest jedoch mit einer solchen verbindbar.

Hierzu ist denkbar, dass die Verarbeitungseinheit sich zum Beispiel mittels Bluetooth oder einer sonstigen Wireless Verbindung mit einer Empfangseinheit des Fahrzeugs verbindet und der jeweilige Kenn- oder Grenzwert und/oder die jeweilige Warnung und/oder die jeweilige Identifikation des Benutzers auf einem Display des Fahrzeugs wiedergegeben werden.

Alternativ oder zusätzlich ist vorstellbar, dass diese einzelnen Werte und/oder Identifikationen auch extern abrufbar und/oder extern darstellbar sind. Zum Beispiel kann das Auto auf eine Überbelegung hin von einem externen Controller überwacht werden.

Zum Beispiel kann mittels einer Datenverbindung die Verarbeitungseinheit mit einer Auslöseinheit eines Airbags in Verbindung stehen, sodass die Verarbeitungseinheit auch die Auslöseinheit steuern und/oder regeln kann, insbesondere in Bezug auf einen Auslösezeitpunkt des Airbags. Zusätzlich und/oder alternativ ist es möglich, dass die Verarbeitungseinheit eine Controllereinheit des Airbags mit Daten zum Beispiel im Hinblick auf einen Belegungstyp, Position und/oder Gewicht eines Benutzers des Fahrzeugsitzes versorgt.

Diese Daten können dazu führen, dass der Auslösezeitpunkt und die Auslösereihenfolge des Airbags auf den Benutzer angepasst sind, sodass ein Personenschaden an dem Benutzer vermieden wird.

Gemäß zumindest einer Ausführungsform ist zumindest eine Elektrode und/oder dielektrische Schicht auf dem Trägermaterial oder auf einer dem Trägermaterial angeordnete, insbesondere wasserundurchlässigen Schicht aufgedruckt oder mittels eines Dünnschichtverfahrens aufgebracht.

Dies heißt, dass zumindest ein Element, vorzugsweise sowohl die Elektrode als auch die dielektrische Schicht, auf dem Trägermaterial oder einer zwischen dem Sensor und dem Trägermaterial aufgebrachten vorzugsweise elektrisch nicht leitfähigen, weiter vorzugsweise wasserundurchlässigen Schicht mittels eines Druckverfahrens aufgedruckt.

Bei dem Druckverfahren kann es sich zum Beispiel um ein Inkjetverfahren handeln.

Zum Beispiel ist die Verarbeitungseinheit in der gleichen Weise wie der Sensor auf das Trägermaterial aufgebracht. Hierzu ist vorstellbar, dass auch die Verarbeitungseinheit, zumindest jedoch eine, insbesondere leitende, Schicht der Verarbeitungseinheit auf das Trägermaterial zum Beispiel aufgedruckt ist. Die Datenkommunikation zwischen der Verarbeitungseinheit und dem Sensor kann dann über die oben genannten Leiterbahnen entstehen. Diese Leiterbahnen können zumindest teilweise, vorzugsweise jedoch vollständig, in den Webstoff eingewoben sein oder sogar einzelne Fasern des Webstoffs selbst ausbilden.

Zum Beispiel ist zumindest eine Elektrode flächig ausgeführt. Das heißt, dass eine Dicke der Elektrode im Vergleich zu deren Flächenausdehnung vernachlässigbar ist. Eine solche Elektrode kann daher insbesondre mittels eines Druckverfahrens hergestellt werden.

Alternativ hierzu kann eine Dicke zumindest einer Elektrode höchstens 5 mm betragen. Hierzu kann das Druckverfahren mehrmals angewandt werden, sodass zumindest zwei, vorzugsweise jedoch dann mehr, Einzeldruckschichten übereinander gestapelt werden.

Des Weiteren kann die Elektrode auch mittels eines 3D-Druckverfahrens auf dem Trägermaterial angeordnet sein.

### 1. Das FDM-Verfahren (Fused Deposition Modeling)

### Alternativbezeichnungen: Fused Filament Fabrication (FFF), Fused Layer Modeling (FLM)

Das Verfahren bezeichnet schichtweises Auftragen (Extrusion) eines Materials durch eine heiße Düse. Das Verbrauchsmaterial befindet sich in Form eines langen Drahts (sog. Filament) auf einer Rolle und wird durch die Fördereinheit in einen Druckkopf geschoben, dort eingeschmolzen und auf einem Druckbett ausgebracht. Druckkopf und/oder Druckbett sind dabei in drei Richtungen beweglich. So können Kunststoffschichten schrittweise aufeinander aufgebracht werden.

### 2. Das SLS Verfahren (Selektives Lasersintern)

Im Unterschied zum Sinterverfahren, bei dem Stoffe in Pulverform unter Hitzeeinwirkung miteinander verbunden werden, geschieht dies beim SLS-Verfahren selektiv durch einen Laser (alternativ auch Elektronenstrahl oder Infrarotstrahl). Es wird also nur ein bestimmter Teil des Pulvers miteinander verschmolzen.

Dazu wird stets eine dünne Pulverschicht von der Beschichtungseinheit auf dem Druckbett ausgebracht. Der Laser (oder andere Energiequelle) wird nun punktgenau auf einzelne Stellen der Pulverschicht ausgerichtet, um die erste Schicht der Druckdaten auszubilden. Hierbei wird das Pulver an- oder aufgeschmolzen und verfestigt sich anschließend wieder durch geringfügiges Abkühlen. Das nicht aufgeschmolzene Pulver bleibt um die gesinterten Bereiche herum liegen und dient als Stützmaterial. Nachdem eine Schicht verfestigt ist, senkt sich das Druckbett um den Bruchteil eines Millimeters ab. Die Beschichtungseinheit fährt nun über das Druckbett und bringt die nächste Pulverschicht aus. Anschließend wird die zweite Schicht der Druckdaten durch den Laser (oder eine andere Energiequelle) gesintert. So entsteht schichtweise ein dreidimensionales Objekt.

### 3. Three-Dimensional Printing (3DP)

Das SDP-Verfahren funktioniert sehr ähnlich wie das selektive Lasersintern, doch anstelle einer gerichteten Energiequelle verfährt ein Druckkopf über das Pulver. Dieser gibt winzige Tröpfchen von Bindemittel auf die zugrunde liegenden Pulverschichten ab, die so miteinander verbunden werden. Ansonsten ist dieses Verfahren dem SLS-Verfahren gleich.

### 4. Stereolithographie (SLA)

Anstelle eines Kunststoffdrahts oder Druckmaterials in Pulverform kommen beim Stereolithographie-Verfahren flüssige Harze, sog. Photopolymere, zum Einsatz. Sie werden schichtweise durch UV-Strahlung verhärtet und erzeugen so dreidimensionale Objekte. Dafür wird die Bauplattform im Harzbecken schrittweise abgesenkt. Es gibt auch Varianten (sog. Polyjet-Verfahren) ohne ein ganzes Becken mit flüssigem Harz. Dafür wird ein Epoxidharz tröpfchenweise aus einer Düse aufgebracht und durch einen UV-Laser sofort ausgehärtet.

### 5. Laminated Object Manufacturing (LOM)

Alternativbezeichnung: Layer Laminated Manufacturing (LLM)

Das Verfahren basiert weder auf chemischen Reaktionen, noch auf einem thermischen Prozess. Es wird dabei mit einem trennenden Werkzeug (z.B. einem Messer oder Kohlendioxidlaser), einer Folie oder einer Platte (z.B. Papier) an der Kontur geschnitten und schichtweise aufeinander geklebt. So entsteht durch Absenken der Bauplattform ein Schichtobjekt aus geklebten, übereinanderliegenden Folien.

Eine oder mehrere wasserundurchlässige Schichten und/oder auch die Feuchteschicht können in derselben Art und/oder Dicke wie die Elektrode aufgebracht werden.

Gemäß zumindest einer Ausführungsform bedeckt die Feuchteschicht den Kondensator vollständig.

Dies kann heißen, dass die Feuchteschicht, nach außen, das heißt in der Querrichtung den Sensor nach außen abgrenzt und abschließt, sodass der Sensor zwischen der Feuchteschicht und dem Trägermaterial angeordnet ist.

Gemäß zumindest einer Ausführungsform weist der Sensor zumindest einen weiteren Kondensator auf, welcher in der Querrichtung unter oder über dem Kondensator angeordnet und durch eine weitere wasserundurchlässige Schicht beabstandet von dem Kondensator auf oder unter dieser weiteren wasserundurchlässigen Schicht angeordnet ist, sodass ein Kondensatorenstack entsteht.

Der weitere Kondensator kann in der gleichen Weise wie der Kondensator aufgebaut sein und ebenso in einer gleichen Weise wie der Kondensator auf die weitere wasserundurchlässige Schicht angeordnet sein.

Mittels eines derartigen Kondensatorenstacks kann die Sensorik ganz besonders einfach verfeinert werden nämlich insofern, als dass denkbar ist das bei zwei den Kondensatorstack ausbildenden Sensoren beide Sensoren die gleichen Aufgaben verrichten, jedoch durch die einzelnen Sensoren jeweilige Messwerte ermittelt werden, die zusammen genommen auf einen Mittelwert schließen lassen. Zum Beispiel wird von jedem der beiden Sensoren jeweils die (relative) Feuchtigkeit der Umgebung gemessen wobei aus diesen beiden Messwerten dann der Feuchtigkeitsmittelwert ermittelt wird. Gleiches kann entsprechend mit der Druckmessung geschehen, sodass die Genauigkeit der gesamten Messung insbesondere einer Kombination der Messungen von (relativer) Feuchtigkeit und dem jeweiligen Druck besonders genau ausgestaltet werden kann.

Gemäß zumindest einer Ausführungsform bildet die wasserundurchlässige Schicht und/oder die weitere wasserundurchlässige Schicht die dielektrische Sicht zumindest teilweise selbst aus.

Dies kann heißen, dass ein anstatt der separaten Positionierung einer dielektrischen Schicht neben der wasserundurchlässigen Schicht und/oder neben der weiteren wasserundurchlässigen Schicht, diese dielektrische Schicht selbst durch die wasserundurchlässige Schicht und/oder die weitere wasserundurchlässige Schicht gebildet ist.

Eine derartige Erzeugung der dielektrischen Schicht durch die wasserundurchlässigen Schicht(en) bildet daher ein besonders einfaches und kostengünstiges Herstellungsverfahren zu einer kostengünstigen Vorrichtung.

Davon abgesehen kann grundsätzlich vorgesehen sein die Elektroden, die dielektrische Schicht und die wasserundurchlässige Schicht(en) derart zueinander anzuordnen, dass ein elektrischer Kurzschluss in jedem Fall verhindert ist.

Gemäß zumindest einer Ausführungsform beträgt eine maximale Dicke der Feuchteschicht wenigstens 30% und höchstens 80% der maximalen Dicke der wasserundurchlässigen Schicht und/oder der maximalen Dicke der weiteren wasserundurchlässigen Schicht.

Dies stellt nicht nur einen besonders flach gebauten Sensor sicher, sondern gewährleistet auch eine besonders schnelle Reaktionszeit auf Feuchtigkeitsveränderungen. Die von außen auf die Feuchteschicht einwirkende Feuchtigkeit muss daher keine großen Strecken zu dem Dielektrikum durchwandern.

Des Weiteren betrifft die vorliegende Erfindung ein Verfahren zur Messung von Feuchtigkeit wobei insbesondere angemerkt sei, dass alle für die obig beschriebene Vorrichtung offenbarten Merkmale auch für das hier beschriebene Verfahren offenbart sind und umgekehrt.

Gemäß zumindest einer Ausführungsform umfasst das Verfahren zu Messung von Feuchtigkeit zunächst einen ersten Schritt mittels welchem zumindest ein Kontrollsystem, insbesondere nach zumindest einem der vorhergehenden Ansprüche, bereitgestellt wird, wobei durch das Kontrollsystem zumindest ein Sensor zu Messung von Feuchtigkeit bereitgestellt wird, wobei der Sensor zumindest einen Kondensator mit zumindest zwei Elektroden, welche, insbesondere in einer horizontalen Richtung entlang eines und auf einem, insbesondere flexiblem, Trägermaterial zueinander angeordnet sind aufweist, wobei zwischen den Elektroden zumindest eine dielektrische Schicht angeordnet ist.

Erfindungsgemäß ist auf einer dem Trägermaterialabgewandten Seite zumindest einer Elektrode und/oder der dielektrischen Schicht zumindest stellenweise, zumindest eine, zumindest teilweise flüssigkeitsdurchlässige und/oder flüssigkeitsabsorbierende Feuchteschicht angeordnet, wobei somit die zumindest eine Elektrode und/oder die dielektrische Schicht in einer Querrichtung zwischen dem Trägermaterial und der Feuchteschicht angeordnet sind, sodass sich eine Kapazität durch die auf die dielektrische Schicht zumindest teilweise treffende Flüssigkeit zumindest teilweise verändert, wobei eine Verarbeitungseinheit diese Änderung misst und/oder speichert, sodass ein kapazitiver Feuchtesensor entsteht.

Dabei weist das oben beschrieben Verfahren die gleichen Vorteile und vorteilhaften Ausgestaltungen wie die obig beschriebene Vorrichtung auf.

Im Folgenden wird die hier beschriebene Erfindung anhand zweier Ausführungsbeispiele und den dazugehörigen Figuren näher beschrieben.

Gleiche oder gleichwirkende Bestandteile sind mit den gleichen Bezugszeichen versehen.

Die Figuren 1A bis 1Czeigen ein Ausführungsbeispiel eines hier beschriebenes und erfindungsgemäßes Kontrollsystems.

In der Figur 2 ist einer schematisch perspektivischen Ansicht eine in Bezug auf die Schichtenordnung dargestellte Explosionszeichnung eines Sensors der hier beschriebenen Vorrichtung dargestellt.

In der Figur 3 ist ein weiteres Ausführungsbeispiel einer hier beschriebenen Vorrichtung gezeigt.

In der Figur 4 ist ein weiteres Ausführungsbeispiel einer hier beschriebenen Vorrichtung gezeigt.

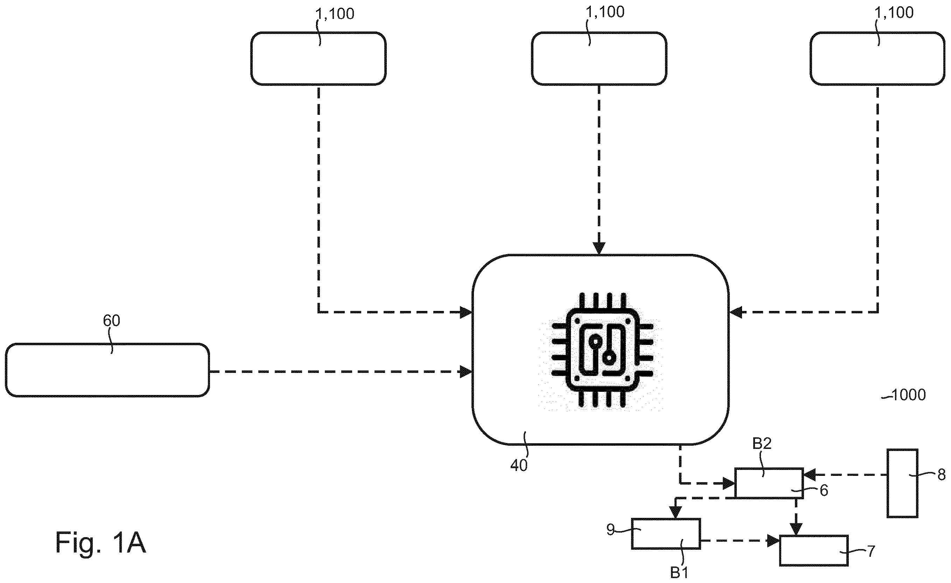

Der Figur 1A ist in einem Ausschnitt ein schematischer Aufbau eines hier beschriebenen erfindungsgemäßen Kontrollsystems 1000 gezeigt. Erkennbar ist eine Verarbeitungseinheit 5, welche in Datenkommunikation mit einer Mehrzahl von Sensoren 1 ist. Die Verarbeitungseinheit 5 bildet zusammen mit den Sensoren 1 eine Vorrichtung 100. Die von den einzelnen Sensoren 1 gemessen Feuchtigkeits- und/oder Druckwerte werden eine zentrale CPU 40 gesendet um dort gespeichert und/oder weiterverarbeitet zu werden. Zudem ist ein Temperatursensor 60, welcher eine Umgebungstemperatur und/oder eine Temperatur des Sensors 1 misst und an die Verarbeitungseinheit 4 der Vorrichtung 100 und/oder an die zentrale CPU 40 weiterleitet.

Die zentrale CPU 40 und/oder die Verarbeitungseinheit 5 vergleicht diese Daten, also die Feuchtigkeitswerte, mit in einer Datenbank hinterlegten oder an die Datenbank gesendete entsprechenden Werten, und, vorzugsweise nur, bei Übereinstimmung mit diesen hinterlegten Werten oder entsprechenden Wertebereichen, die zentrale CPU 40 ein Freigabesignal an eine Abgleicheinrichtung 6 sendet, welche daraufhin ein Nutzungsobjekt 7 zur Nutzung freischaltet.

Eine Sendeeinrichtung 8, welche an die Abgleicheinrichtung 6 vorgegebene Werte oder Wertebereiche der Feuchtigkeitswerte sendet ist vorhanden, wobei die Abgleicheinrichtung 6 diese empfangenen Werte mit den von der zentralen CPU 40 an die Abgleicheinrichtung 6 gesendeten Werte oder Wertebereiche vergleicht.

Auf Basis der einzelnen Feuchte- und Druckwerte kann die die zentrale CPU 40 zumindest einen jeweiligen Kennwert ermitteln, aus welchem ableitbar ist, welcher Individuum nach Gewicht und/oder Größe gerade die Vorrichtung 100 zur Messung von Feuchtigkeit besetzt.

Außerdem ist eine Gesichtserfassungseinrichtung 9 dargestellt, mittels welcher die erfassten Bilddaten B1 mit den Berechtigungsdaten B2 verglichen werden, die ebenso in der Datenbank hinterlegt sind, wobei dieser Vergleich einen Klassifikationsvergleich von Datenklassen der Bilddaten B1 mit Datenklassen der Berechtigungsdaten B2 umfasst, wobei eine Klassifikation der Bilddaten B1 auf Basis von Bewegungsvektoren des Benutzers derart durchgeführt wird, dass zunächst aus der zeitlichen Bewegung des Benutzers ein Bewegungsprofil von der Gesichtserfassungseinrichtung 9 erstellt wird, wobei das Bewegungsprofil des Benutzers Bewegungsvektoren desselbigen umfasst, und weiter wobei Benutzer und/oder Benutzerbewegungen zu sogenannten Datenblops oder Datenclustern zusammengefasst werden, die dann in ihrer Form und/oder Ausdehnung klassifiziert werden.

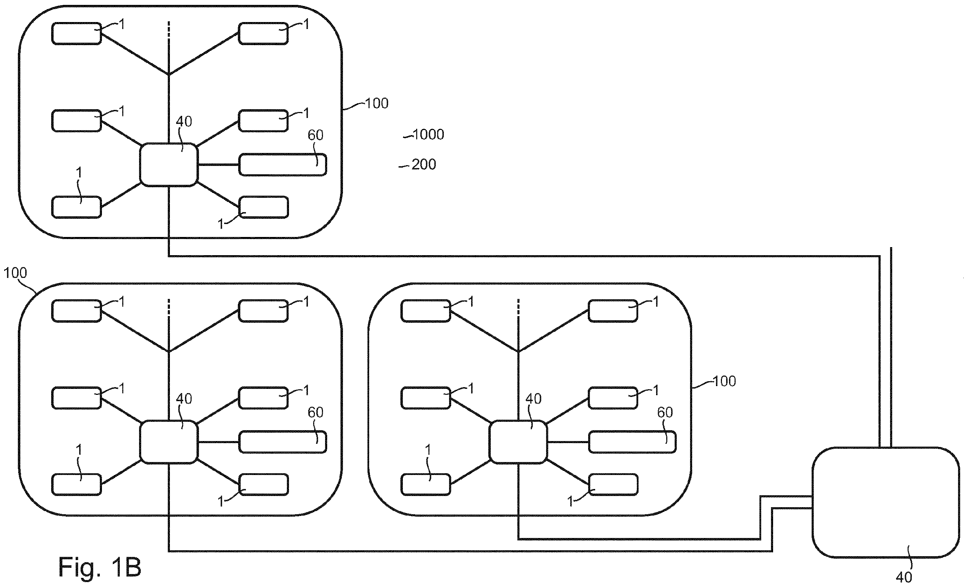

Die Figur 1B zeigt schematisch das gesamte Kontrollsystem 1000, mit einer Mehrzahl an Sensorgruppen, welche durch die einzelnen Vorrichtungen 100 zur Messung von gebildet sind und welche jeweils eine Verarbeitungseinheit 5 zeigen. Jeder Verarbeitungseinheit 5 ist daher eine Mehrzahl an Sensoren 1 zugeordnet.

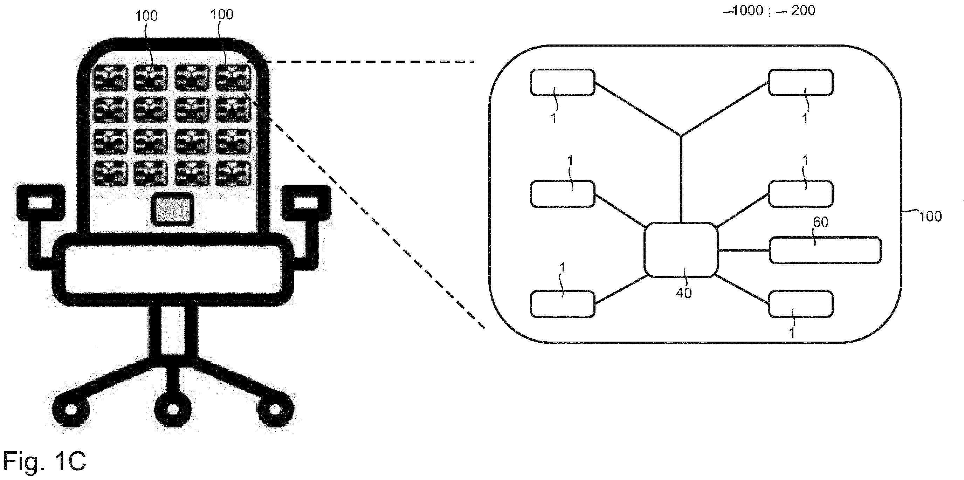

Die Figur 1C zeigt schematisch eine Verbauung und Integration des Kontrollsystems 1000 in einen Stuhl, insbesondere in einen Bürostuhl.

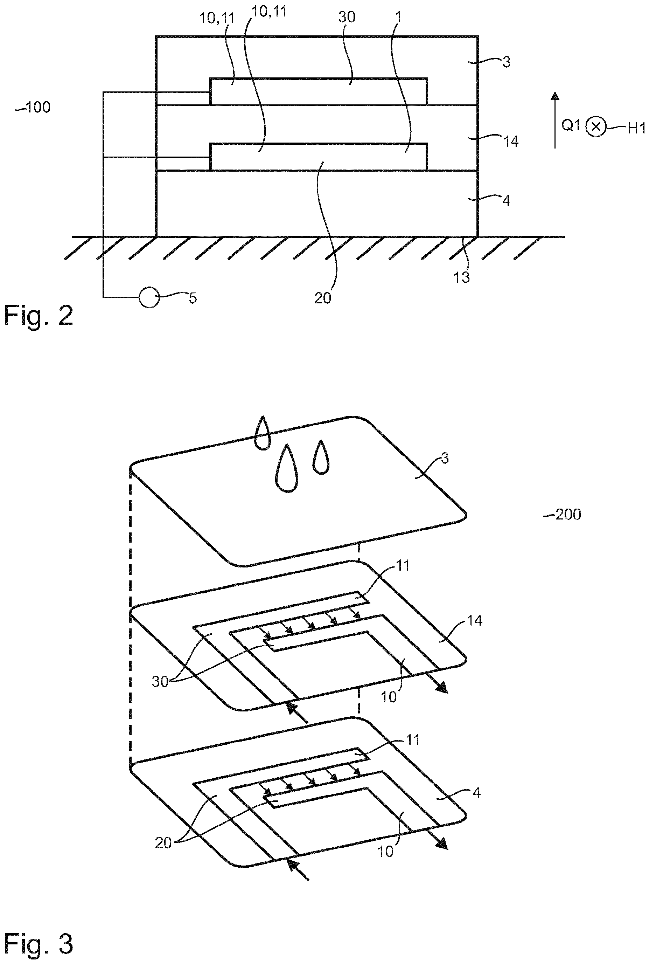

Wie nun der Figur 2 entnommen werden kann, ist dort eine Vorrichtung 100 zur Messung von Feuchtigkeit gezeigt.

Beispielhaft ist dort ein Sensor 1 dargestellt, wobei der Sensor 1 einen Kondensatorstack zeigt mit einem Kondensator 20, sowie einem Kondensator 30, wobei die einzelnen Elektroden 10, 11 der Kondensatoren 20, 30 in der horizontalen Richtung H1 übereinander angeordnet sind, wobei alternativ hierzu jedoch selbstverständlich eine Anordnung der einzelnen Elektroden 10, 11 eines einzelnen Kondensators 20, 30 in der Querrichtung Q1 welche senkrecht zur horizontalen Richtung H1 verläuft und damit auch senkrecht zur Haupterstreckungsrichtung des dort gezeigten Sensors 1 verlaufen oder angeordnet sein können.

Die einzelnen Elektroden 10, 11 sind auf einem Trägermaterial 13 angeordnet. Bei dem Trägermaterial 13 kann es sich insbesondere um einen Webstoff, insbesondere um einen flexiblen Webstoff handeln.

Auf dem Trägermaterial 13 ist eine wasserundurchlässige Schicht 4 angeordnet, wobei auf dieser wasserundurchlässigen Schicht 4 die beiden Elektroden 10, 11 des Kondensators 20 in der horizontalen Richtung H1 aufgedruckt sind.

Die Elektroden 10, 11 des Kondensators 20 sind vollständig von einer weiteren wasserundurchlässigen Schicht 14 umgeben. Auf dieser wasserundurchlässigen Schicht 14 ist in der gleichen Art und Weise der weitere Kondensator 30 mit entsprechenden Elektroden 10, 11 aufgedruckt. Zudem sind in dem vorliegenden Ausführungsbeispiel freiliegende Außenflächen der einzelnen Elektroden 10, 11 des weiteren Kondensators 30 vorzugsweise vollständig von einer wasserdurchlässigen und/oder wasserabsorbierenden Feuchteschicht 3 umgeben.

Über diese Feuchteschicht 3 kann Wasser auf eine dielektrische Schicht 4 treffen, welche vorliegend in der horizontalen Richtung H1 zwischen den jeweiligen Elektroden 10, 11 eines Kondensators 20, 30 angeordnet ist.

Im vorliegenden Ausführungsbeispiel der Figuren 2 und 3 bildet die wasserundurchlässige Schicht 4 selbst eine dielektrische Schicht 4 des Kondensators 20 auf. Selbiges gilt für die weitere wasserundurchlässige Schicht 14 in Bezug auf den weiteren Kondensator 30.

Durch Auftreffen und Durchdringen der Feuchtigkeit über die Feuchteschicht 3 werden die dielektrischen Eigenschaften insbesondere der dielektrischen Schicht 2 des weiteren Kondensators 30 verändert.

Darüber hinaus ist eine Verarbeitungseinheit 5 erkennbar, welche in datentechnischer Verdingung mit den beiden Kondensatoren 20, 30 steht, wobei diese Verarbeitungseinheit 5 dazu eingerichtet und dafür vorgesehen ist, eine Änderung der relativen Feuchtigkeit der Umgebung und/oder der Feuchteschicht 3 zu messen.

Durch die in der Figur 3 dargestellte "stackwise"-Anordnung und dadurch dass die weitere wasserundurchlässige Schicht 14 verhindert, dass der Kondensator 20 mit Feuchtigkeit in Kontakt kommt kann daher vorgesehen sein, dass lediglich der weitere Kondensator 30 und dessen dielektrische Schicht 4 der Feuchtigkeit ausgesetzt ist. Hierzu kann die Verarbeitungseinheit 5 dann eine Veränderung der Kapazität des weiteren Kondensators 30 vergleichen mit der stabilen Kondensatorkapazität des Kondensators 20, sodass hierzu ein besonders einfacher Vergleich in der Veränderung der relativen Feuchtigkeit und/auch des jeweiligen Belastungsdruckes hergestellt sein kann.

Durch den in der Figur 2 dargestellten Pfeil ist auch eine Druckrichtung unter welcher der Sensor 1 mit Druck beaufschlagt wird gezeigt. Beides kann vorzugsweise durch den Sensor 1 und insbesondere durch die Vorrichtung 100 gemessen, ausgewertet und gespeichert werden. Hierzu dient insbesondere die in der Erfindung als wesentlich dargestellte Verarbeitungseinheit 5, welche zusätzlich auch entsprechende Druckwerte und insofern damit verbundene Änderungen in der Kapazität der einzelnen Sensoren 1 messen und auswerten kann, sodass die Verarbeitungseinheit 5 zusätzlich dazu eingerichtet und dafür vorgesehen ist eine durch äußeren Druck verursachte Kapazitätsänderung des Kondensators 20 und insbesondere auch des weiteren Kondensators 30 zu messen und/oder zu speichern.

Die Feuchteschicht 3 kann flexibel oder nicht flexibel ausgebildet sein. Zudem ist es möglich, dass die Feuchteschicht 3 als Webstoff ausgebildet ist. Insbesondere kann es sich um einen Webstoff handeln, welcher im einleitenden Teil der vorliegenden Anmeldung beispielhaft genannt wurde. Zudem ist es jedoch auch möglich dass es sich bei der Feuchteschicht 3 um ein Substrat handelt welches, zum Beispiel in Form eines Epitaxie- oder eines Klebeprozesses auf den weiteren Kondensator 30 aufgebracht, zum Beispiel aufgeklebt wurde.

Die wasserundurchlässige Schicht 14 und/oder die wasserundurchlässige Schicht 15 können ebenso flexibel und nicht flexibel, insbesondere auch ebenso in Form eines Webstoffes oder eines Substrats in der gleichen Weise wie die Feuchteschicht 3 ausgebildet sein.

Zudem ist vorteilhaft denkbar, dass die Elektroden 10, 11 der beiden Kondensatoren 20, 30 auf die wasserundurchlässige Schicht 14 und die weitere wasserundurchlässige Schicht 15 in Form eines Druckprozesses zum Beispiel eines Tintenstrahldruckprozesses aufgedruckt wurden.

In der Figur 3 ist eine Explosionszeichnung gezeigt, wobei insbesondere aus der Figur 3 die jeweilige Anordnung der Elektroden 10, 11 der Kondensatoren 20, 30 hervorgeht. Erkennbar ist wiederum die durch die Pfeilrichtung dargestellte Krafteinwirkung auf den Sensor 1, sowie durch die einzelnen schematisch dargestellten Tropfen einwirkende Feuchtigkeit. Insbesondere ist wiederum erkennbar, dass die Feuchtigkeit insbesondere zwischen den Elektroden 10, 11 eindringt und auf die jeweilige wasserdurchlässige Schicht 14 einen zum Beispiel erheblichen Effekt auf die elektrische Eigenschaft hat, sodass sich die Kapazität zumindest des weiteren Kondensators 30 wie in der Figur 1 erläutert jeweils ändert.

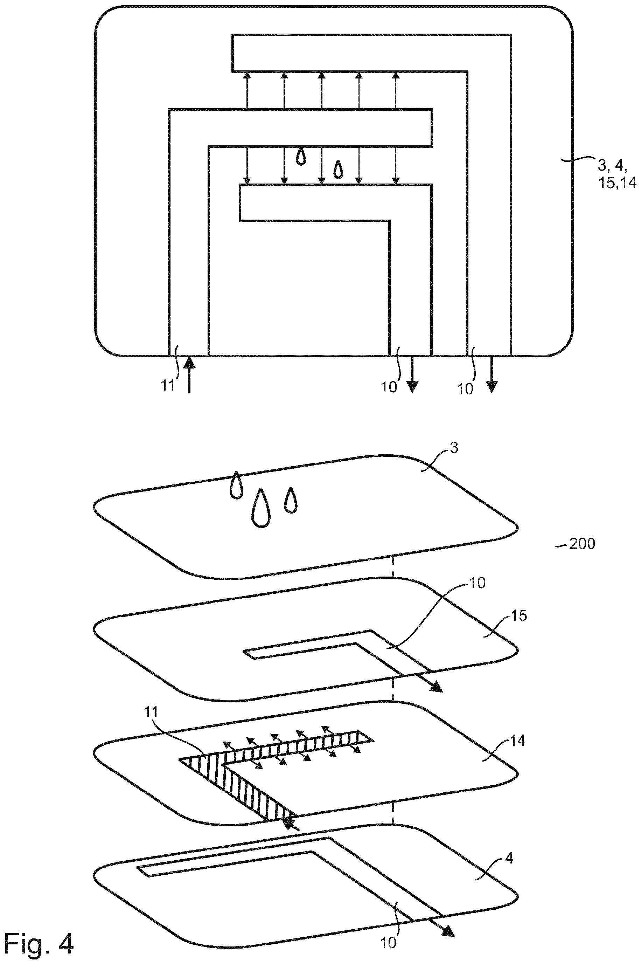

In der Figur 4 ist in einer weiteren Ausführungsform der hier beschriebenen Erfindung gezeigt, dass der Sensor 1 aus zwei Elektroden 10, sowie einer Elektrode 11 bestehen kann. Die Elektroden 10 haben eine Polarität (vorzugsweise die gleiche Polarität), während die Elektrode 11 eine davon unterschiedliche Polarität aufweist, wobei jedoch im unteren Teilbild der Figur 3 die Explosionszeichnung des linken Teils der Figur 3 gezeigt ist und erkennbar ist, dass drei wasserundurchlässige Schichten 4, 14, 15 verwendet werden. Die Elektroden 10 können auch unterschiedliche Polaritäten und/oder elektrische Potentiale aufweisen. Auch können die Elektroden 10 miteinander elektrisch verbunden sein.

Zum Beispiel können die Elektroden 10, 11 auch jeweils eine separate Polarität und/oder ein separates elektrisches Potential aufweisen und/oder generieren. Entsprechendes kann auch für die in den hier folgenden Figuren in Bezug auf die Elektroden gelten.

Zum Beispiel ist die unterste wasserundurchlässige Schicht wiederum die wasserundurchlässige Schicht 4, die darauffolgende wasserundurchlässige Schicht 14 und die in der Querrichtung Q1 darauf angeordnete wasserundurchlässige Schicht 15 eine weitere wasserundurchlässige Schicht, wobei jeweils eine Elektrode auf einer separaten wasserundurchlässigen Schicht jeweils aufgebracht insbesondere aufgedruckt ist.

In dieser Stackung der einzelnen wasserundurchlässigen Schichten 4, 14 und 15 und wird daher durch Zusammenführen dieser Schichten der im linken Teil der Figur 4 gezeigte Kondensator 20 erzeugt, wobei hierbei in der Querrichtung Q1, die Elektroden 10 jeweils, wie im dementsprechenden Teilbild entnommen werden kann auf unterschiedlichen Ebenen angeordnet sin.

Alternativ hierzu kann auch die Elektrode 11 zusammen mit zumindest einer der Elektroden 10 in einer gemeinsamen Ebene, das heißt auf oder in einer gemeinsamen wasserundurchlässigen Schicht 4, 14, 15 aufgebracht werden, sodass zum Beispiel nur noch die zweite der Elektroden 10 auf eine separaten wasserundurchlässigen Schicht 4, 14, 15 aufgestackt werden muss.

Grundsätzlich können daher die einzelnen Elektroden 10,11 in unterschiedlichen Ebenen in der Q1-Richtung zueinander angeordnet sein. Zum Beispiel gilt eine paarweise Zuordnung zwischen genau einer wasserundurchlässigen Schicht 4, 14, 15 mit genau einer Elektrode 10, 11.

### Bezugszeichenliste

- 1: Sensor
- 3: Feuchteschicht
- 4: dielektrische Schicht/ wasserundurchlässige Schicht
- 5: Verarbeitungseinheit
- 6: Abgleicheinrichtung
- 7: Nutzungsobjekt
- 8: Sendeeinrichtung
- 9: Gesichtserfassungseinrichtung
- 10: Elektrode
- 11: Elektrode
- 12: Elektrode
- 13: Trägermaterial
- 14: wasserundurchlässige Schicht
- 15: wasserundurchlässige Schicht
- 20: Kondensator
- 30: Kondensator
- 40: CPU
- 60: Temperatursensor
- 100: Vorrichtung200 Verfahren
- 1000: Kontrollsystem

- B1: Bilddaten
- B2: Berechtigungsdaten
- H1: horizontalen Richtung
- Q1: Querrichtung

## Patentansprüche

1. Kontrollsystem (1000) zur Abgleichung von gemessenen Feuchtigkeitswerten mit von in einer Datenbank hinterlegten Feuchtigkeitswerten, umfassend zumindest eine
- Vorrichtung (100) zur Messung von Feuchtigkeit umfassend
- zumindest einen Sensor (1) zur Messung von Feuchtigkeit, wobei der Sensor (1)
- zumindest einen Kondensator (20) mit zumindest zwei Elektroden (10, 11), welche, insbesondere in einer horizontalen Richtung (H1) entlang eines und auf einem, insbesondere flexiblem, Trägermaterial (13) zueinander angeordnet sind, wobei zwischen den Elektroden (10, 11) zumindest eine dielektrische Schicht (4) angeordnet ist, wobei
auf einer dem Trägermaterial (13) abgewandten Seite zumindest einer Elektrode (10, 11) und/oder der dielektrischen Schicht (2) zumindest stellenweise zumindest eine zumindest teilweise flüssigkeitsdurchlässige und/oder flüssigkeitsabsorbierende Feuchteschicht (3) angeordnet ist, wobei somit die zumindest eine Elektrode (10, 11) und/oder die dielektrische Schicht (4) in einer Querrichtung (Q1) zwischen dem Trägermaterial (13) und der Feuchteschicht (3) angeordnet sind, sodass sich eine Kapazität durch die auf die dielektrische Schicht (4) zumindest teilweise treffende Flüssigkeit zumindest teilweise verändert, wobei eine Verarbeitungseinheit (5) dazu eingerichtet und dafür vorgesehen ist Messwerte des Sensors (1) zu messen und/oder zu speichern, sodass ein kapazitiver Feuchtesensor entsteht, wobei von der Verarbeitungseinheit (5) die von dem Sensor gemessenen Daten an eine zentrale CPU (40) des Kontrollsystems (1000) gesendet werden, wobei diese Daten von der Verarbeitungseinheit (5) verarbeitet werden,
wobei die zentrale CPU (40) und/oder die Verarbeitungseinheit (5) dazu eingerichtet und dafür vorgesehen ist diese Daten, also die Feuchtigkeitswerte, mit in einer Datenbank hinterlegten oder an die Datenbank gesendete entsprechenden Werten vergleicht, und, vorzugsweise nur, bei Übereinstimmung mit diesen hinterlegten Werten oder entsprechenden Wertebereichen, die zentrale CPU (40) ein Freigabesignal an eine Abgleicheinrichtung (6) des Kontrollsystems (1000) sendet, welche daraufhin ein Nutzungsobjekt (7) zur Nutzung freischaltet.

2. Kontrollsystem (1000) nach Anspruch 1,
**gekennzeichnet, durch**
zumindest eine Sendeeinrichtung (8) dazu eingerichtet und dafür vorgesehen ist an die Abgleicheinrichtung (6) vorgegebene Werte oder Wertebereiche der Feuchtigkeitswerte zu senden, und die Abgleicheinrichtung (6) diese empfangenen Werte mit den von der zentralen CPU (40) an die Abgleicheinrichtung (6) gesendeten Werte oder Wertebereiche vergleicht.

3. Kontrollsystem (1000) nach dem vorhergehenden Anspruch
**dadurch gekennzeichnet, dass**
es sich bei der Sendeeinrichtung (8) um einen Fahrzeugschlüssel handelt oder diese zumindest ein Teil davon ist, wobei die Sendeeinrichtung (8) dazu eingerichtet und dafür vorgesehen ist mittels einer drahtlosen Verbindung mit der Abgleicheinrichtung (6) und/oder der zentralen CPU (40) zu kommunizieren.

4. Kontrollsystem (1000) nach zumindest einem der vorhergehenden Ansprüche, **dadurch gekennzeichnet, dass**
die Abgleicheinrichtung (6) in den Fahrzeugschlüssel integriert verbaut ist.

5. Kontrollsystem (1000) nach zumindest einem der vorhergehenden Ansprüche,
**dadurch gekennzeichnet, dass**
die Abgleicheinrichtung (6) dazu eingerichtet und dafür vorgesehen ist ein Fahrzeugschloss, eine Wegfahrsperre, ein Lenkradschloss, ein Gas- und/oder Bremspedal zur Nutzung bei einer Datenübereinstimmung freizugeben.

6. Kontrollsystem (1000) nach zumindest einem der vorhergehenden Ansprüche,
**dadurch gekennzeichnet, dass**
auf Basis der einzelnen Feuchtewerte die zentrale CPU (40) dazu eingerichtet und dafür vorgesehen ist zumindest einen jeweiligen Kennwert zu ermitteln, aus welchem ableitbar ist, welcher Individuum nach Gewicht und/oder Größe gerade die Vorrichtung (100) zur Messung von Feuchtigkeit besetzt, und/oder dass nach einer Sitzbelegung des Fahrzeugsitzes abhängig von der identifizierten Person eine vorgespeicherte Sitzposition, ein vorgespeichertes Licht- und /oder Schallambiente, ein vorgespeicherter Musik- und/oder Radiosender oder andere personalisierte Dienste ausgewählt und/oder angewendet werden.

7. Kontrollsystem (1000) nach Anspruch 1,
**dadurch gekennzeichnet, dass**
sofern die gemessenen Daten mit den hinterlegten Daten nicht übereinstimmen und/oder um mehr als 25% von den hinterlegten Datenwerten abweichen eine Gesichtserfassungseinrichtung (9) dazu eingerichtet und dafür vorgesehen ist ein Gesicht des Benutzers auf Basis von Bilddaten (B1) zu erfassen, und trotz der Datenabweichung dann das Nutzungselement freischaltet, sofern die Gesichtserfassungseinrichtung (9) ein Benutzergesicht als identisch mit einem in der Gesichtserfassungseinrichtung (9) hinterlegten Gesicht identifiziert.

8. Kontrollsystem (1000) nach Anspruch 7,
**dadurch gekennzeichnet, dass**
die erfassten Bilddaten (B1) mit den Berechtigungsdaten (B2) vergleichbar sind, die ebenso in der Datenbank hinterlegt sind, wobei dieser Vergleich einen Klassifikationsvergleich von Datenklassen der Bilddaten (B1) mit Datenklassen der Berechtigungsdaten (B2) umfasst, wobei eine Klassifikation der Bilddaten (B1) auf Basis von Bewegungsvektoren des Benutzers derart durchfühbar ist, dass zunächst aus der zeitlichen Bewegung des Benutzers ein Bewegungsprofil von der Gesichtserfassungseinrichtung (9) erstellbar ist, wobei das Bewegungsprofil des Benutzers Bewegungsvektoren desselbigen umfasst, und weiter wobei
Benutzer und/oder Benutzerbewegungen zu sogenannten Datenblops oder Datenclustern zusammenfassbar sind, die dann in ihrer Form und/oder Ausdehnung klassifizierbar sind.

9. Verfahren (200) zur Abgleichung von gemessenen Feuchtigkeitswerten umfassend zunächst einen ersten Schritt mittels welchem ein Kontrollsystem (1000) bereitgestellt wird, welches umfasst:
- zumindest einen Sensor (1) zur Messung von Feuchtigkeit bereitgestellt wird, wobei der Sensor (1)
- zumindest einen Kondensator (20) mit zumindest zwei Elektroden (10, 11), welche, insbesondere in einer horizontalen Richtung (H1) entlang eines und auf einem, insbesondere flexiblem, Trägermaterial (13) zueinander angeordnet sind, wobei zwischen den Elektroden (10, 11) zumindest eine dielektrische Schicht (4) angeordnet ist,
wobei
auf einer dem Trägermaterial (13) abgewandten Seite zumindest einer Elektrode (10, 11) und/oder der dielektrischen Schicht (4) zumindest stellenweise zumindest eine zumindest teilweise flüssigkeitsdurchlässige und/oder flüssigkeitsadsorbierende Feuchteschicht (3) angeordnet ist, wobei somit die zumindest eine Elektrode (10, 11) und/oder die dielektrische Schicht (4) in einer Querrichtung (Q1) zwischen dem Trägermaterial (13) und der Feuchteschicht (3) angeordnet sind, sodass sich eine Kapazität durch die auf die dielektrische Schicht (4) zumindest teilweise treffende Flüssigkeit zumindest teilweise verändert, wobei eine Verarbeitungseinheit (5) Messwerte des Sensors (1) misst und/oder speichert, sodass ein kapazitiver Feuchtesensor entsteht,
**dadurch gekennzeichnet, dass**
die zentrale CPU (40) und/oder die Verarbeitungseinheit (5) diese Daten, also die Feuchtigkeitswerte, mit in einer Datenbank hinterlegten oder an die Datenbank gesendete entsprechenden Werten vergleicht, und, vorzugsweise nur, bei Übereinstimmung mit diesen hinterlegten Werten oder entsprechenden Wertebereichen, die zentrale CPU (40) ein Freigabesignal an eine Abgleicheinrichtung (6) sendet, welche daraufhin ein Nutzungsobjekt (7) zur Nutzung freischaltet.

## Claims

1. Control system (1000) for matching measured humidity values with humidity values stored in a database, comprising
- at least one device (100) for measuring humidity, comprising
- at least one sensor (1) for measuring humidity, wherein the sensor (1)
- At least one capacitor (20) having at least two electrodes (10, 11) which are arranged, in particular in a horizontal direction (H1), along one another and on a carrier material (13), in particular a flexible carrier material, at least one dielectric layer (4) being arranged between the electrodes (10, 11), i wherein at least one at least partially liquid-permeable and/or liquid-absorbing damp layer (3) is arranged at least in places on a side of at least one electrode (10, 11) and/or the dielectric layer (2) facing away from the carrier material (13), the at least one electrode (10, 11) and/or the dielectric layer (4) thus being arranged in a transverse direction (Q1) between the carrier material (13) and the damp layer (3), so that a capacitance is at least partially changed by the liquid at least partially impinging on the dielectric layer (4), a processing unit (5) being set up and provided for measuring and/or storing measured values of the sensor (1), so that a capacitive humidity sensor is produced, wherein the processing unit (5) transmits the data measured by the sensor to a central CPU (40) of the control system (1000), this data being processed by the processing unit (5), wherein
the central CPU (40) and/or the processing unit (5) is set up and provided for this purpose compares this data, i.e. the humidity values, with corresponding values stored in a database or sent to the database, and, preferably only if these stored values or corresponding value ranges match, the central CPU (40) sends an enable signal to a matching device (6) of the control system (1000), which then enables a utilization object (7) for use.

2. Control system (1000) according to claim 1
**characterized by**
at least one transmitting device (8) is set up and provided for transmitting predetermined values or value ranges of the humidity values to the matching device (6), and the matching device (6) compares these received values with the values or value ranges transmitted to the matching device (6) by the central CPU (40).

3. Control system (1000) according to the preceding claim,
**characterized in that**
the transmitting device (8) is a vehicle key or is at least a part thereof, the transmitting device (8) being set up and intended for communicating with the matching device (6) and/or the central CPU (40) by means of a wireless connection.

4. Control system (1000) according to at least one of the preceding claims,
**characterized in that**
the matching device (6) is integrated into the vehicle key.

5. Control system (1000) according to at least one of the preceding claims,
**characterized in that**
the matching device (6) is set up and provided for releasing a vehicle lock, an immobilizer, a steering wheel lock, an accelerator and/or brake pedal for use in the event of a data match.

6. Control system (1000) according to at least one of the preceding claims,
**characterized in that**
on the basis of the individual humidity values, the central CPU (40) is set up and provided for determining at least one respective characteristic value from which it is possible to derive which individual by weight and/or height is currently occupying the device (100) for measuring humidity, and/or **in that**, after a seat occupancy of the vehicle seat, a pre-stored seat position, a pre-stored light and/or sound ambience, a pre-stored music and/or radio station or other personalized services are selected and/or applied depending on the identified person.

7. Control system (1000) according to claim 1,
**characterized in that**
if the measured data do not match the stored data and/or deviate by more than 25% from the stored data values, a face detection device (9) is set up and provided for detecting a face of the user on the basis of image data (B1), and then activates the usage element despite the data deviation, if the face detection device (9) identifies a user face as identical to a face stored in the face detection device (9).

8. Control system (1000) according to claim 7,
**characterized in that**
the captured image data (B1) can be compared with the authorization data (B2), which are also stored in the database, this comparison comprising a classification comparison of data classes of the image data (B1) with data classes of the authorization data (B2), it being possible to carry out a classification of the image data (B1) on the basis of movement vectors of the user in such a way that, first of all, a movement profile can be created by the face detection device (9) from the temporal movement of the user, the movement profile of the user comprising movement vectors of the user, and furthermore it being possible to combine user and/or user movements into so-called data blobs or data clusters, which can then be classified in terms of their shape and/or extent.
user and/or user movements can be combined to form so-called data blobs or data clusters, which can then be classified in terms of their shape and/or extent.

9. A method (200) for matching measured moisture values, comprising first a first step by means of which a control system (1000) is provided, which comprises:
- at least one sensor (1) for measuring humidity is provided, wherein the sensor (1)
- at least one capacitor (20) with at least two electrodes (10, 11), which are arranged, in particular in a horizontal direction (H1) along one and on one, in particular flexible, carrier material (13) relative to one another, at least one dielectric layer (4) being arranged between the electrodes (10, 11),
wherein
at least one at least partially liquid-permeable and/or liquid-adsorbing damp layer (3) is arranged at least in places on a side of at least one electrode (10, 11) and/or the dielectric layer (4) facing away from the carrier material (13), the at least one electrode (10, 11) and/or the dielectric layer (4) thus being at least partially covered with a liquid-permeable and/or liquid-adsorbing damp layer (3), 11) and/or the dielectric layer (4) are arranged in a transverse direction (Q1) between the carrier material (13) and the moisture layer (3), so that a capacitance is at least partially changed by the liquid at least partially impinging on the dielectric layer (4), wherein a processing unit (5) measures and/or stores measured values of the sensor (1), so that a capacitive moisture sensor is produced,
haracterlzed in that
the central CPU (40) and/or the processing unit (5) compares this data, i.e. the humidity values, with corresponding values stored in a database or sent to the database, and, preferably only if these stored values or corresponding value ranges match, the central CPU (40) sends an enable signal to an matching device (6), which then enables a utilization object (7) for utilization.

## Revendications

1. Système de contrôle (1000) pour la mise en correspondance de valeurs d'humidité mesurées avec des valeurs d'humidité enregistrées dans une base de données, comprenant
- au moins un dispositif (100) de mesure de l'humidité comprenant
- au moins un capteur (1) pour mesurer l'humidité, ledit capteur (1)
- au moins un condensateur (20) avec au moins deux électrodes (10, 11), qui sont disposées l'une par rapport à l'autre, en particulier dans une direction horizontale (H1), le long d'un matériau support (13), en particulier flexible, au moins une couche diélectrique (4) étant disposée entre les électrodes (10, 11), dans lequel
sur une face opposée au matériau de support (13) d'au moins une électrode (10, 11) et/ou de la couche diélectrique (2), au moins une électrode (10, 11) et une couche diélectrique (2) sont disposées l'une à côté de l'autre par endroits au moins une couche humide (3) au moins partiellement perméable aux liquides et/ou absorbant les liquides, la au moins une électrode (10, 11) et/ou la couche diélectrique (4) étant ainsi disposées dans une direction transversale (Q1) entre le matériau de support (13) et la couche humide (3), de sorte qu'une capacité est au moins partiellement modifiée par le liquide arrivant au moins partiellement sur la couche diélectrique (4), une unité de traitement (5) étant aménagée et prévue pour mesurer et/ou enregistrer des valeurs de mesure du capteur (1), de sorte qu'il en résulte un capteur d'humidité capacitif, dans lequel
les données mesurées par le capteur sont envoyées par l'unité de traitement (5) à une CPU centrale (40) du système de contrôle (1000), ces données étant traitées par l'unité de traitement (5), dans lequel
la CPU centrale (40) et/ou l'unité de traitement (5) est conçue et prévue pour comparer ces données, c'est-à-dire les valeurs d'humidité, avec des valeurs correspondantes déposées dans une banque de données ou envoyées à la banque de données, et, de préférence uniquement en cas de concordance avec ces valeurs déposées ou des plages de valeurs correspondantes, la CPU centrale (40) envoie un signal de libération à un dispositif d'équilibrage (6) du système de contrôle (1000), qui libère ensuite un objet d'utilisation (7) pour l'utilisation.

2. Système de contrôle (1000) selon la revendication 1,
**caractérisé par**
au moins un dispositif d'émission (8) est conçu et prévu pour envoyer au dispositif d'équilibrage (6) des valeurs ou des plages de valeurs prédéterminées des valeurs d'humidité, et le dispositif d'équilibrage (6) compare ces valeurs reçues avec les valeurs ou les plages de valeurs envoyées par l'unité centrale (40) au dispositif d'équilibrage (6).

3. Système de contrôle (1000) selon la revendication précédente
**caractérisé en ce que**
le dispositif d'émission (8) est une clé de véhicule ou fait au moins partie de celle-ci, le dispositif d'émission (8) étant conçu et prévu pour communiquer au moyen d'une liaison sans fil avec le dispositif d'équilibrage (6) et/ou l'unité centrale de traitement (40).

4. Système de contrôle (1000) selon au moins l'une des revendications précédentes,
**caractérisé en ce que**
le dispositif d'équilibrage (6) est intégré dans la clé du véhicule.

5. Système de contrôle (1000) selon au moins l'une des revendications précédentes,
**caractérisé en ce que**
le dispositif d'équilibrage (6) est conçu et prévu pour libérer un verrou de véhicule, un dispositif antidémarrage, un verrou de volant, une pédale d'accélérateur et/ou de frein pour une utilisation en cas de concordance des données.

6. Système de contrôle (1000) selon au moins l'une des revendications précédentes,
**caractérisé en ce que**
sur la base des différentes valeurs d'humidité, l'unité centrale (40) est conçue et prévue pour déterminer au moins une valeur caractéristique respective à partir de laquelle on peut déduire quel individu occupe précisément le dispositif (100) de mesure de l'humidité en fonction de son poids et/ou de sa taille, et/ou **en ce que**, après une occupation du siège du véhicule, une position de siège préenregistrée, une ambiance lumineuse et/ou sonore préenregistrée, une station de musique et/ou de radio préenregistrée ou d'autres services personnalisés sont sélectionnés et/ou appliqués en fonction de la personne identifiée.

7. Système de contrôle (1000) selon la revendication 1,
**caractérisé en ce que**
dans la mesure où les données mesurées ne concordent pas avec les données enregistrées et/ou s'écartent de plus de 25% des valeurs de données enregistrées, un dispositif de détection de visage (9) est conçu et prévu pour détecter un visage de l'utilisateur sur la base de données d'image (B1) et, malgré l'écart de données, libère alors l'élément d'utilisation dans la mesure où le dispositif de détection de visage (9) identifie un visage d'utilisateur comme étant identique à un visage enregistré dans le dispositif de détection de visage (9).

8. Système de contrôle (1000) selon la revendication 7,
**caractérisé en ce que**
les données d'image (B1) saisies sont comparables aux données d'autorisation (B2) qui sont également enregistrées dans la base de données, cette comparaison comprenant une comparaison de classification de classes de données des données d'image (B1) avec des classes de données des données d'autorisation (B2), une classification des données d'image (B1) pouvant être effectuée sur la base de vecteurs de mouvement de l'utilisateur de telle sorte qu'un profil de mouvement peut d'abord être établi par le dispositif de détection de visage (9) à partir du mouvement temporel de l'utilisateur, le profil de mouvement de l'utilisateur comprenant des vecteurs de mouvement de celui-ci, et en outre, dans lequel
les mouvements de l'utilisateur et/ou de l'utilisateur peuvent être regroupés **en ce que** l'on appelle des blocs de données ou des grappes de données, qui peuvent ensuite être classés en fonction de leur forme et/ou de leur étendue.

9. Procédé (200) pour la mise en correspondance de valeurs d'humidité mesurées, comprenant tout d'abord une première étape au moyen de laquelle un système de contrôle (1000) est fourni, lequel comprend
- au moins un capteur (1) pour mesurer l'humidité, dans lequel le capteur (1)
- au moins un condensateur (20) avec au moins deux électrodes (10, 11), qui sont disposées l'une par rapport à l'autre, en particulier dans une direction horizontale (H1), le long d'un matériau de support (13), en particulier flexible, au moins une couche diélectrique (4) étant disposée entre les électrodes (10, 11),
dans laquelle
sur une face opposée au matériau de support (13) d'au moins une électrode (10, 11) et/ou de la couche diélectrique (4) est disposée au moins par endroits au moins une couche humide (3) au moins partiellement perméable aux liquides et/ou absorbant les liquides, la au moins une électrode (10, 11) et/ou la couche diélectrique (4) sont disposées dans une direction transversale (Q1) entre le matériau de support (13) et la couche humide (3), de sorte qu'une capacité est au moins partiellement modifiée par le liquide arrivant au moins partiellement sur la couche diélectrique (4), une unité de traitement (5) mesurant et/ou mémorisant des valeurs de mesure du capteur (1), de sorte qu'il en résulte un capteur d'humidité capacitif,
**caractérisé en ce que**
la CPU centrale (40) et/ou l'unité de traitement (5) compare ces données, c'est-à-dire les valeurs d'humidité, à des valeurs correspondantes déposées dans une banque de données ou envoyées à la banque de données, et, de préférence uniquement en cas de concordance avec ces valeurs déposées ou des plages de valeurs correspondantes, la CPU centrale (40) envoie un signal de libération à un dispositif d'équilibrage (6), qui libère ensuite un objet d'utilisation (7) pour l'utilisation.
